**Europäisches Patentamt**

**European Patent Office**

**Office européen des brevets**

(11) Publication number: **0 312 455 B1**

# EUROPEAN PATENT SPECIFICATION

(45) Date of publication of patent specification: **01.03.95**  (51) Int. Cl.⁶: **B29C 45/56**, B29C 45/76, B29C 45/28, B29D 11/00

(21) Application number: **88402588.3**

(22) Date of filing: **12.10.88**

(54) **Molding apparatus.**

(30) Priority: **13.10.87 US 107767**

(43) Date of publication of application:
**19.04.89 Bulletin 89/16**

(45) Publication of the grant of the patent:
**01.03.95 Bulletin 95/09**

(84) Designated Contracting States:
**BE DE ES FR GB IT LU NL**

(56) References cited:
**EP-A- 0 144 622     FR-A- 1 487 410**
**FR-A- 1 530 649     FR-A- 2 525 525**
**US-A- 2 666 230     US-A- 3 238 568**
**US-A- 3 787 159     US-A- 4 364 878**
**US-A- 4 664 854**

**PATENT ABSTRACTS OF JAPAN, vol. 10, no.**
**234 (M-507)[2290], 14th August 1986;& JP-**
**A-61 66 623 (HITACHI) 05-04-1986**

(73) Proprietor: **GENTEX CORPORATION**
**324 Main Street**
**P.O. Box 315**
**Carbondale**
**Pennsylvania 18407 (US)**

(72) Inventor: **Weymouth, Russell F., Jr.**
**Old Spencer Road**
**Charlton Depot**
**Massachusetts 01509 (US)**

(74) Representative: **Joly, Jean-Jacques et al**
**Cabinet Beau de Loménie**
**158, rue de l'Université**
**F-75340 Paris Cédex 07 (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10 / 3.0 9 / 3.3.3)

## Description

### Summary of the Invention

My invention relates to a method and an apparatus for molding one or more articles of various masses and shapes, such as a series of opthalmic lenses having different optical powers according to the preambles of claims 1 and 5 respectively. To avoid witness lines in the finished article, a parison mass of a molten plastic is injected without back pressure into a variable volume mold cavity which is thereafter compressed to produce pressure within the mold cavity. I have found that the parison mass is most efficiently governed by providing a supply of molding material at a temperature sufficiently elevated to render it molten, and at a predetermined elevated pressure. The molten material is connected through a valve to the mold cavity; and the mass of molding material which flows is governed by controlling the period of time during which the valve is open. I further found that the pressure of compression molding should be varied as a function of the shape or mass of the article. For example, a lens of high negative power should have a low molding pressure; and a lens of high positive power should have a high molding pressure. I may provide these variable molding pressures by an actuator which is variably energized. Alternatively I may achieve these variable molding pressures by employing a machine having a variable mechanical advantage which is driven by an actuator of fixed energization.

One object of my invention is to provide molding apparatus in which the flow of a parison mass of molten molding material at a predetermined elevated pressure is governed by controlling the period of actuation of a valve.

Another object of my invention is to provide compression molding apparatus wherein the compression pressure on the parison mass within a variable volume mold cavity is governed in accordance with the shape or mass of the article to be molded.

A further object of my invention is to provide compression molding apparatus wherein the compression pressure is governed by a machine of variable mechanical advantage.

Other and further objects of my invention will appear from the following description.

In general my invention contemplates the provision of a variable volume mold cavity including a movable piston. A supply of molten molding material at a predetermined elevated temperature and a predetermined elevated pressure is coupled through an actuatable valve to the molding cavity. The valve is actuated for a predetermined period of time to permit free viscous flow of a parison mass into the mold cavity with constant pressure therein, which is generally atmospheric. Subsequent compression of the molten material within the mold cavity is achieved by an actuator which is coupled to the piston either directly or through a machine of variable mechanical advantage. In the first case the compression pressure is governed by varying the excitation of the actuator. In the second case the actuator may have fixed excitation, while the mechanical advantage of the machine may be varied. One such machine of variable mechanical advantage may comprise an eccentric or crank in conjunction with a connecting rod coupling the eccentric or crank to the piston.

### The Prior Art

US-A-4,364,878 shows parison compression molding apparatus wherein the parison mass is provided by an auxillary piston and cylinder which injects a predetermined volume of the molten molding material into the mold cavity. Such apparatus is mechanically complex even for molding a single article; and becomes even more so where a plurality of articles of different shapes and masses are to be molded.

US-A-4,664,854 shows apparatus for molding a plurality of articles of different masses and shapes wherein the parison mass is controlled by limit stops on the variable volume mold cavities. Molten plastic is injected until a limit stop is reached whereupon the back pressure within the mold cavity rises to equality with the injection pressure and no further flow of molten plastic occurs. The apparatus of Bakalar produces witness lines in lenses of negative powers because the limit stop prevents the cavity from achieving a volume greater than that of the injected plastic so that the pressure within the mold cavity remains substantially constant. The reference further applies equal pressures to each of the mold cavities irrespective of whether the charges therein have the same or different masses or shapes.

An example of an injection moulding apparatus having multiple nozzles cooperating with a plurality of moulds can be found US-A-3 238 568, being the base of the preamble of the independent claims. In this art, the cavities are completely filled under control of slidable valve rods working according to a predetermined sequence.

Finally, there is known from EP-A-0 144 622 a two-step moulding process specially intended for the manufacture of spectacle lenses. The moulding material is made to fill an expanded mould at low pressure, after which the mould is compressed to define the moulded object.

## Brief Description of the Drawings

FIGURE 1 is a fragmentary sectional elevation with parts broken away showing one embodiment of my invention.

FIGURE 2 is a graph showing the time relationship between electrical actuation of various components.

FIGURE 3 is a graph showing the relative mass of a typical series of lenses of various powers.

FIGURE 4 is a graph showing representative compression molding pressures of a series of lenses of various powers.

FIGURE 5 is a fragmentary sectional elevation of a second embodiment of my invention providing a relatively low compression pressure for molding a lens of high negative power.

FIGURE 6 is a fragmentary sectional elevation of the second embodiment of my invention providing a relatively high compression pressure for molding a lens of less negative or even positive power.

## Description of the Preferred Embodiments

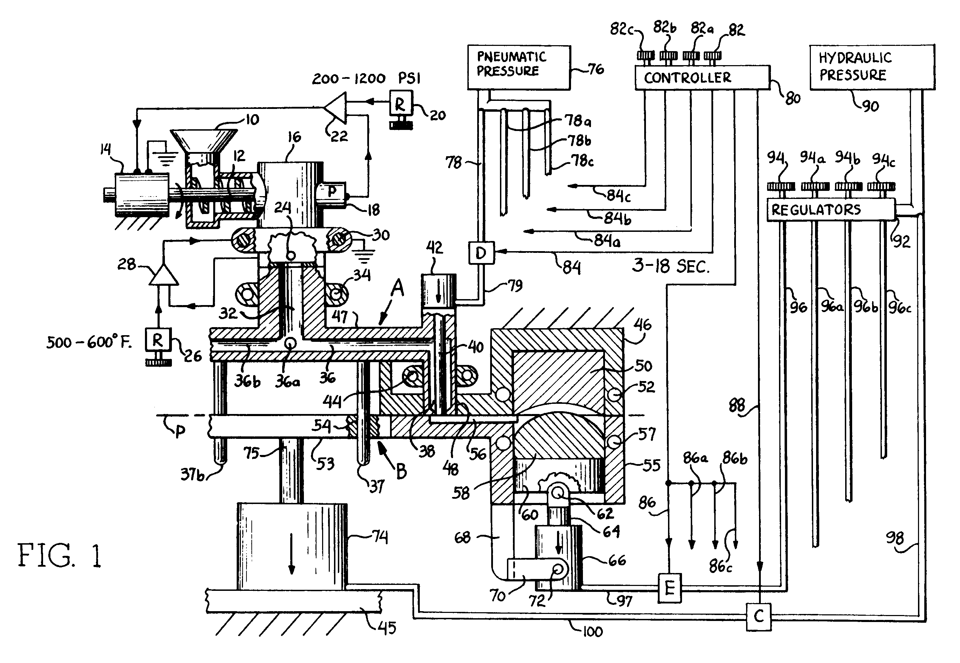

Referring now to FIGURE 1 of the drawings, into a hopper 10 are loaded granules of a plastic such as polycarbonate. The granules are conveyed by a screw 12 into a chamber or barrel 16. Screw conveyor 12 is rotated by a variable speed servomotor 14. The barrel 16 is heated by an electrical heater 30. A barrel temperature sensor 24 is coupled to one input of a differential amplifier or comparator 28 which is supplied with an electrical signal from a manually adjustable reference source 26 scaled to represent a value in the range of 245 to 330°C (475 to 625°F). The output of differential amplifier 28 excites heater 30 to maintain the temperature of the molten plastic within barrel 16 at the reference value. Current flows from amplifier 28 through heater 30 to circuit ground. Barrel 16 is further provided with a pressure sensor 18 which is coupled to one input of a comparator or differential amplifier 22. Comparator 22 is provided with an electrical signal from a manually adjustable reference source 20 which is scaled to represent from $1.4 \times 10^6$ to $8.3 \times 10^6$ Pa (200 to 1200 pounds per square inch). The output of differential amplifier 22 drives servomotor 14 to maintain the pressure within barrel 16 at the reference value. Current flows from amplifier 22 through motor 14 to circuit ground. Reference sources 20 and 26, sensors 18 and 24, and amplifiers 22 and 28 are also provided with circuit ground connections, not shown. Molten plastic flows through a sprue 32, provided with a sprue heater 34, into a manifold 47 which is provided with four passages including 36, 36a and 36b, one for each of four corresponding molds.

Passage 36 is coupled to a valve including a nozzle 38 and a vertically moving control rod 40 of a pneumatic actuator 42. In the downward position of control rod 40 shown the valve is closed. Rod 40 may be resiliently biased to this position. Pneumatic pressure may be admitted through pipe 79 to raise control rod 40 and permit molten plastic to flow. Nozzle 38 is provided with a nozzle heater 44.

A stationary mold member 46 mounts a concave insert 50 which shapes the outer or convex surface of a negative lens. Nozzle 38 extends through a mating hole 48 bored in mold member 46. Mold member 46 is maintained at an elevated temperature by heater 52. The manifold 47 is provided with a plurality of, for example, four depending pins such as 37 and 37b. The foregoing elements constitute the stationary or "A" side of the mold, where P indicates a horizontal parting plane.

The "B" or movable side of the mold includes a spider or square member 53 which is mounted on the rod 75 of a hydraulic actuator 74 resiliently biased downwardly, away from the position shown where it is maintained by hydraulic pressure through pipe 100. Pins 37 and 37b extend through corresponding holes, such as 54, in member 53. Secured to the spider 53 is a mold member 55. A cold runner 56 is formed in member 55 and extends from the nozzle 38 into the mold cavity below the parting plane P. The cold runner 56 may be of any suitable cross-sectional shape and is shown as being rectangular with a depth of for example 2 mm. Inside member 55 is mounted a movable piston 60 to which is secured a convex mold insert 58 which shapes the inner or concave surface of a negative lens. Member 55 is maintained at an elevated temperature by a heater 57. Secured to member 55 is a bracket 68 mounting a yoke 70. Yoke 70 supports a pivotable hydraulic actuator 66 by means of a pin 72. Hydraulic actuator 66 is provided with an output rod 64 which is normally biased resiliently in a downwardly direction. Rod 64 is pivotally connected to piston 60 by a pin 62. Hydraulic pressure on line 97 forces rod 64 upwardly to the position shown. Pivots 62 and 72 permit the axes of rod 64 and piston 62 to be or become misaligned without torquing or cocking piston 60. A source of pneumatic pressure 76 provides compressed air to lines 78, 78a, 78b and 78c. Line 78 is connected through a valve D to line 79. Lines 78a, 78b and 78c are connected to corresponding valves for the other three molds. A time interval controller 80 is provided with manual adjustments 82, 82a, 82b and 82c to produce actuating signals of three to eighteen seconds duration on respective lines 84, 84a, 84b and 84c. Line 84 electrically actuates valve D. Lines 84a, 84b and 84c electrically actuate the corresponding valves for the other three molds.

A source of hydraulic pressure 90 is connected to regulators 92 provided with manual adjustments 94, 94a, 94b and 94c to produce regulated pressures on respective lines 96, 96a, 96b and 96c. Line 96 is connected through a valve E to line 97. Lines 96a, 96b and 96c are connected to corresponding valves for the other three molds. Hydraulic pressure source 90 is also connected to a line 98 which is coupled through a valve C to line 100. Controller 80 further provides electrical signals on lines 86, 86a, 86b and 86c. The signal on line 86 electrically actuates valve E. Lines 86a, 86b and 86c electrically actuate the corresponding valves for the other three molds. Controller 80 further provides a signal on line 88 which electrically actuates valve C.

Hydraulic actuator 74 is secured to a base member 45. Base member 45, stationary member 46 and motor 14 are all secured to a common frame or mechanical ground, as schematically indicated. Heaters 52 and 57 conveniently maintain the inserts 50 and 58 at a temperature somewhat below the melting point of the molding material. For example, polycarbonate has a glass transition temperature of 152°C (305°F); and the temperature of the mold inserts may range between 99 and 146°C (210 and 295°F).

It may be assumed as a starting point that the mold members are separated. In the absence of hydraulic pressure on line 100 rod 75 is resiliently biased downwardly permitting the entire B side of the mold to move downwardly from the closed position shown. At the same time, in the absence of hydraulic pressure on line 97, rod 64 moves downwardly relative to mold member 55 from the position shown carrying with it piston 60 and insert 58. Valves C, D and E as well as controller 80 are provided with circuit ground connections, not shown.

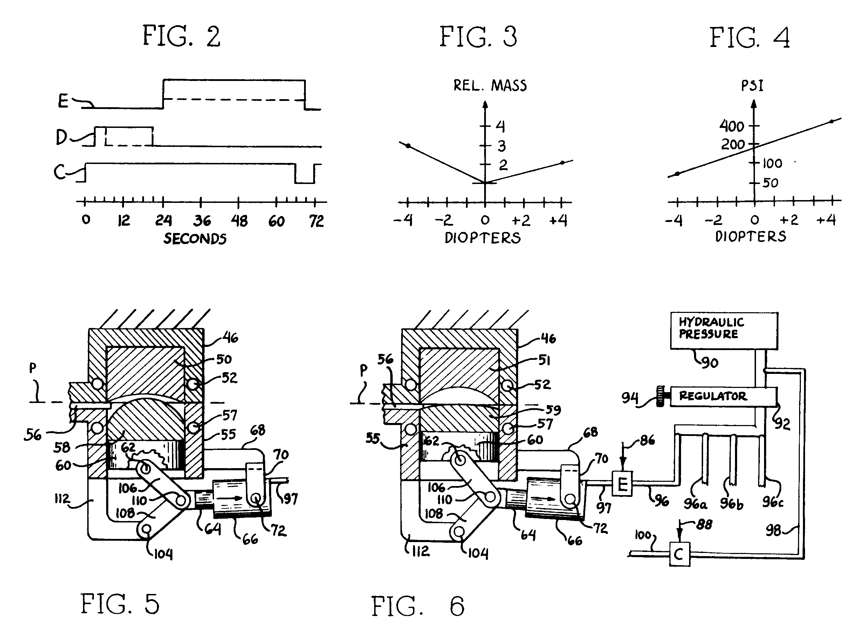

Referring now to FIGURE 2, at zero seconds of time, controller 80 provides an electrical signal to valve C which couples hydraulic pressure from source 90 through lines 98 and 100 to actuator 74. This moves rod 75 upwardly to the position shown thereby closing the mold. At this time the mold cavity is appreciably larger than its final size. At 3 seconds of time, controller 80 provides a signal on line 84 which opens valve D. Pneumatic pressure from source 76 is coupled through lines 78 and 79 to pneumatic actuator 42 which raises the control rod 40. Molten plastic at a predetermined temperature and pressure now flows through nozzle 38 and the cold runner 56 into the mold cavity, partially filling it. A three second duration of opening of valve D is shown by the dashed line; and an eighteen second duration is shown by the solid line. Valve D will close between 6 and 21 seconds of time. At 24 seconds of time controller 80 provides a signal on line 86 actuating valve E. Regulated hydraulic pressure on line 96 is coupled through line 97 to hydraulic actuator 66 moving piston 60 upwardly to substantially the position shown. This compresses the plastic within the mold to a predetermined pressure which is maintained while the article is cooling. To illustrate that the hydraulic pressure output of valve E may be adjusted to various different values by regulator 92, a low hydraulic pressure output of valve E is indicated by the dashed line and a high hydraulic pressure output of valve E is indicated by the solid line. During the period of cooling, there will be a slow and very slight contracting of the dimensions of the article and piston 60 will move upwardly to maintain a constant pressure in the mold. At 66 seconds of time, controller 80 disables the signal on conductor 88 thereby closing valve C. Mold member B now moves downwardly thereby opening the mold. Since valve E is still open, piston 60 moves upwardly relative to mold member 55 from the position shown, thereby expelling the lens or finished article. A robot or other device, not shown, then removes the finished article from the separated mold parts A and B. At 69 seconds of time controller 80 disables the signal on line 86. Valve E closes; and piston 60 moves downwardly relative to mold member 55 below the position shown. Thereafter, at 72 seconds of time, one full cycle having been completed, controller 80 provides a signal on line 88 to valve C moving the mold part B upwardly again.

The parison mass injected varies linearly with the time of actuation of valve D. The molten plastic is highly viscous; and the flow is laminar. Accordingly the mass varies linearly with the pressure set by reference source 20, assuming that there is substantially no back pressure in the mold cavity. The molding time is highly dependent upon the temperatures at which mold inserts 50 and 58 are maintained by heaters 52 and 57. As these temperatures approach the 152°C (305°F.) glass transition of polycarbonate, the molding time increases without limit. Typically the time for a molding cycle may range between one and three minutes, with two minutes being representative. The material in the "cold" runner 56 is considered part of the parison mass of the molded article, even though it is usually removed thereafter mechanically as by cutting or grinding. For some articles, valve 38 may be gated directly onto a surface of the article so that little or no further mechanical processing of the molded article is required.

For a lens of zero diopters having a thickness of 2 mm and a diameter of 76 mm, formed of polycarbonate having a specific gravity of 1.2, the mass is approximately 10.9 grams. In FIGURE 3 there is shown the mass of a polycarbonate lens of 76 mm diameter relative to the 10.9 grams mass of a zero diopter lens having a thickness of 2 mm. In this figure, it is assumed that the lens includes a "planar" portion, wherein both front and back surfaces have the same curvature, and a further power portion having zero edge thickness for positive powers or zero center thickness for negative powers. The relative mass of positive lenses varies linearly from 1 at zero diopters to 2 at +4 diopters. The relative mass of negative lenses varies linearly from 1 at zero diopters to 3 at -4 diopters.

Referring now to FIGURE 4 there is shown a semi-logarithmic graph of molding pressure versus diopters, from which it may be seen that representative pressures are $5.2 \times 10^5$ Pa (75 psi) at -4 diopters, $1.3 \times 10^6$ Pa (184 psi) at zero diopters and $3.1 \times 10^6$ (450 psi) at +4 diopters. The graph is substantially linear where diopters is plotted linearly and pressure in pounds per square inch is plotted logarithmically. It is especially important that the pressure be reduced for negative lenses. If an excessive pressure is maintained, the concave or inner surface of the finished lens flattens and does not maintain sufficient curvature. Accordingly the power of the lens is reduced in the center, introducing inadequate correction for a near-sighted eye and distortion of the field due to the change in power. From FIGURES 3 and 4 it may be noted that lenses of -2 and +4 powers have the same relative mass of 2 but require entirely different compression molding pressures. If the pressure is insufficient, there occur sinks or hollows on the convex or outer surface of the lens. At -4 diopters the pressure may range approximately between 4.6 x $10^5$ and 6.2 x $10^5$ Pa (67 and 90 psi); at zero diopters, approximately between 1.1 x $10^6$ and 1.7 x $10^6$ Pa (165 and 250 psi); and at +4 diopters the pressure may range approximately between 2.8 x $10^6$ and 5.5 x $10^6$ Pa (405 and 800 psi), assuming an intermediate 290°C (550° F.) temperature of the molten plastic in barrel 16. The moulding pressures vary inversely with the temperature set by reference source 26. The moulding pressure P in Pascals is approximately

$$P \doteq 6.9 \times 10^3 \, U \, e^{-.224D}$$

where U is a value ranging between a lower limit of approximately 1.1 x $10^6$ Pa (165 pounds per square inch) and an upper limit L in Pascals of approximately

$$L \doteq 6.9 \times 10^3 \, (205 + 45 \, e^{.25D})$$

where D is the power of the lens in diopters and e is the base of natural logarithms. The representative pressures shown and described in FIGURE 4 are obtained with U $\doteq$ 1.3 x $10^6$ Pa (184 PSI). The lower limit of U $\doteq$ 1.1 x $10^6$ Pa (165 PSI) corresponds to roughly 90% of the representative pressures. The upper limit varies from L $\doteq$ 1.4 x $10^6$ Pa (205 PSI) at very large negative diopters, to L $\doteq$ 1.5 x $10^6$ Pa (222 PSI) at -4 diopters, to L $\doteq$ 1.7 x $10^6$ Pa (250 PSI) zero diopters, to L $\doteq$ 2.3 x $10^6$ Pa (328 PSI) at +4 diopters, and to larger values at larger positive diopters.

FIGURE 1 shows an embodiment of my invention wherein each of the four mold cavity pistons is subjected to a different pressure by means of a corresponding plurality of regulators 92.

FIGURES 5 and 6 show an embodiment of my invention wherein the hydraulic actuators each receive the same regulated pressure and a variable molding pressure is provided by machines having different mechanical advantages.

Referring now to FIGURE 5, bracket 68 and yoke 70 are repositioned so that the axis of hydraulic actuator 66, which pivots on pin 72, is nominally horizontal. Pin 62 of piston 60 is connected to one end of a link 106 which acts as a connecting rod. A pin 110 is journaled in the other end of link 106 and in one end of a further link 108. The other end of link 108 is journaled in a pin 104 mounted on a bracket 112. Link 108 acts as an eccentric or crank. Pin 110 further journals the rod 64 of actuator 66. In FIGURE 5, the article is a negative lens as in FIGURE 1. In FIGURE 5, links 106 and 108 each make an angle of approximately 40° to the horizontal; and the axis of rod 64 is rotated slightly counterclockwise from a horizontal position.

Referring now to FIGURE 6, a different concave mold insert 51 is provided to produce a positive lens. Similarly, a different convex insert 59 is also provided to produce a positive lens. It will be noted that each of links 106 and 108 now make an angle of approximately 50° to the horizontal; and the axis of rod 64 is rotated slightly clockwise from the horizontal. This change in angular orientation of links 106 and 108 is obtained by reducing the height of insert 59 as compared with that of insert 58. In FIGURE 6, as in FIGURE 5, regulator 92 has one manual adjustment 94 to produce a single regulated pressure which is applied through line 96 to valve E and is further applied through each of lines 96a, 96b and 96c to corresponding valves for the other three molds.

Neglecting the slight change in angular orientation of the hydraulic actuator 66, and assuming that the distance between pins 110 and 72 is large compared with the length of links 106 and 108, the force of the hydraulic actuator may be assumed to be substantially horizontal and to the left. With this assumption it may be shown that the vertical force V on piston 60 is equal to one-half the horizontal hydraulic actuator force H multiplied by the tangent of the angle $\theta$ that links 106 and 108 make with the

horizontal; that is,

$$V = \tfrac{1}{2} H \tan \theta.$$

Thus in FIGURE 5, where $\theta = 40°$ and $\tan \theta = .839$, the vertical force on piston 60 is .4195 of the horizontal force provided by hydraulic actuator 66. In FIGURE 6 where $\theta = 50°$, and $\tan \theta = 1.192$, the vertical force on piston 60 is .596 of the horizontal force provided by hydraulic actuator 66. The ratio of vertical forces on piston 60 in FIGURES 6 and 5, for the same horizontal force from hydraulic actuator 66, is .596/.4195 = 1.42 at the least. The ratio of forces in practice is somewhat greater than this. In FIGURE 5, the slight counterclockwise rotation from horizontal of actuator 66 results in a slight downward force component; and the upward force on piston 60 is reduced by one-half of this downward force component. Similarly in FIGURE 6, the slight clockwise rotation of actuator 66 results in a slight upward force component; and the upward force on piston 60 is augmented by one-half of this upward force component. When links 106 and 108 each make an angle of 45° to the horizontal, the axis of rod 64 may be horizontal. Links 106 and 108 need not have equal lengths; and connecting rod 106 may be either shorter or longer than eccentric crank 108.

The wide variation in powers shown in FIGURES 5 and 6 is only for illustrative purposes, since in the molding of four different lenses simultaneously, the lens powers are preferably fairly close to one another so that while the lenses are all different they are at least in the same "ball park". It will be noted that in FIGURES 5 and 6 the ratio of compression pressures is somewhat in excess of 1.42, whereas FIGURE 4 indicates that the ratio of pressures between +4 and -4 power lenses may exceed six. Thus in one production run, the four mold cavities may provide lenses of respective powers -3.25, -3.5, -3.75 and -4. In another production run the four mold cavities may provide lenses of respective powers of +3.25, +3.5, +3.75 and +4. It is not necessary that the mold cavities provide lenses in successive quarter-diopter increments, since some powers may be in little demand or are overstocked. If the -.25, 0 and +.75 diopter lenses are overstocked, then in a further production run the four mold cavities may provide lenses having the respective powers -.5, +.25, +.5 and +1.

The ratio of mechanical advantages of at least 1.42 in FIGURES 5 and 6 will permit the simultaneous molding of four lenses within a range of two diopters, as from -4 to -2, from -3 to -1, from -2 to 0, from -1 to +1, from 0 to +2, from +1 to +3, or from +2 to +4.

The mass flow through nozzle 38 is proportional to the reference pressure 20, the period of actuation of valve D during which the nozzle is open, and to the density of the molten molding material in barrel 16, and is inversely proportional to the viscosity of the molten molding material. The density and viscosity are both functions of the reference temperature 26; and both decrease with increase in temperature. The ratio of viscosity to density is the kinematic viscosity; and this is less temperature dependent. Thus the mass flow is proportional to the reference pressure 20 and to the period during which valve nozzle 38 is open, and is inversely proportional to the kinematic viscosity of the molten molding material. Nozzle 38 and cold runner 56 provide the two main restrictions to flow of the parison mass.

It will be seen that I have accomplished the objects of my invention. The injection of a predetermined parison mass into a mold cavity is governed by the period of actuation of a valve coupled to a supply of molten molding material at a predetermined temperature, and hence kinematic viscosity, and at a predetermined pressure. During the period of flow of the parison mass into the mold cavity, the pressure therein remains substantially constant so that the flow rate is proportional to the predetermined pressure of the supply of molding material. In the compression molding of a plurality of articles having different masses or shapes, the mold cavities are subjected to different pressures. These different pressures may be obtained by a corresponding plurality of unequally excited actuators or by employing machines of variable mechanical advantage driven by similarly excited actuators. A machine of variable mechanical advantage is achieved by providing a pair of links one of which functions as a pivotable eccentric or crank and the other of which functions as a connecting rod which interconnects the eccentric crank and a mold piston. Pivotable mounting of the actuators obviates cocking of the pistons under the actuator forces.

It will be understood that certain features and subcombinations are of utility and may be employed without reference to other features and subcombinations. This is contemplated by and is within the scope of my claims. For example, actuator 42 may be electrical or hydraulic instead of pneumatic. If actuator 42 is electrical, then it may be directly excited by line 84. Similarly, actuator 66 may be pneumatic or electrical; and if electrical then may be directly energized by line 86. Variation of the voltage on line 86 will directly vary the excitation of an electrical actuator 66. Individual variation of the voltages on lines 86a, 86b and 86c will vary the excitation of electrical actuators for the other three molds. Such a voltage variation is also indicated by the dashed and solid curves E of FIGURE 2. Hydraulic actuator 74 may be pneumatic or electrical and if electrical may be directly energized by line 88. The sprue heater 34, the nozzle heater 44, the A side mold heater 52 and the B side mold heater 57 may comprise either electrical heating elements or fluids at elevated temperatures. The mold cavities may number either more or less than the four described and partially shown. While the B side of the mold has been shown to move vertically, it will be understood that the mold may be oriented in a more standard configuration where the B side moves horizontally, the parting plane P being vertical. Actuators 42, 66 and 74 may be double acting rather than being single acting in conjunction with resilient return biasing. Since the time of both opening and closing nozzle 38 by control rod 40 is of importance, actuator 42 is preferably double acting and may positively move rod 40 downwardly by coupling pneumatic source 76 through another valve to the upper end of actuator 42. Valve C and such other valve would be operated oppositely by controller 80 so that when valve D is closed, the other valve is open; and when valve E is open, the other valve is closed. Piston 60 may be of circular planform for some lenses, but may have other planforms such as elliptical, square or rectangular for other articles.

Toggle-clamp machines are well known to the art and comprise a pair of oppositely driven toggles which maintain parallelism of the B side spider or plate 53. Rather than using hydraulic actuator 74 as a direct-acting clamp, it may instead be used to drive a pair of toggles to obtain high clamping force between the A and B mold sides with low hydraulic pressure because of the high force multiplication which the toggles can provide.

It has been suggested that the total force on the B mold side may be used not only to clamp the A and B mold sides together but also to compress the mold cavity or cavities. Typically the clamping force for a four-lens mold is $4.45 \times 10^5$ N (100,000 pounds). The area of four 76 mm lenses is nearly 180 cm$^2$ (28 square inches). For -4 diopter lenses, the compression pressure is $5.2 \times 10^5$ Pa (75 psi); and the total compression force is 9350 N (2100 pounds). The total force on the B mold side would thus be 445,000 + 9350 = 454,350 N (100,000 + 2,100 = 102,100 pounds). If there is an error of only ±1%, or 4450 N (±1,000 pounds), in each of the total and clamping forces, then the compression force will be 9350 ± 8900 N (2100 ± 2000 pounds), an enormous and unacceptable error of ±95%. It will be appreciated that small errors in each of two large numbers cause larger and larger errors in their difference as the difference becomes smaller and smaller. I have found it far preferable directly to control the compression pressure of each mold cavity independently of the force applied to the B mold side.

While my invention has particular application to the molding of a series of lenses of various powers and masses, it is generally applicable to the molding of various articles having different masses and shapes. It is, therefore, to be understood, that my invention is not to be limited to the specific details shown and described.

**Claims**

1. Apparatus for parison moulding an article including in combination a variable volume mould cavity (46,55) adapted to form the article, means (38) for supplying a moulding material at a predetermined temperature sufficiently elevated to render it molten and at a predetermined elevated pressure, means including a valve (D) for coupling the supplying means to the cavity, the valve being normally closed and preventing the flow of molten material into the cavity,

   characterized by means (84) for opening the valve for a predetermined period of time to permit the flow at a uniform rate into the cavity of a predetermined mass of molten material, during the period of flow of the molten mass the cavity being only partially filled and the pressure therein remaining substantially constant.

2. An apparatus according to claim 1, further including means for compressing the mould cavity (46, 55), the compressing means comprising an actuator (42) and means including a machine having a variable mechanical advantage for coupling the actuator (106, 108) to the cavity.

3. Appparatus according to claim 1 or 2, wherein the machine comprises a pair of links (62, 72) pivotally connected at a point, and in that the actuator comprises a pivotally mounted cylinder (60) and a piston rod pivotally connected to one link adjacent to said point.

4. Apparatus according to any one of claims 1 to 3, wherein the article is one of a series of lenses including negative powers.

5. A method of compression moulding an article including the step of controlling the mass of a molten moulding material which flows from a source at an elevated pressure through an initially closed valve (D) to partially fill at a substantially constant lower pressure a variable volume mould cavity characterized in that the controlling step includes the steps of opening the valve to permit flow of molten material from the source to the cavity at a uniform rate, maintaining the valve open for a predetermined period of time to cause a predetermined mass of molten material to flow into the cavity during said period, and closing the valve to stop the flow before the cavity becomes filled.

6. A method as in claim 5 for compression moulding one of a series of lenses comprising negative powers further including the steps of compressing the mould cavity to produce a predetermined pressure P of the molten moulding material therein, wherein said pressure in Pa is approximately

$$P \doteq 6.9 \times 10^3 \times Ue^{-224D}$$

where U is a value ranging between a lower limit of approximately $1.1 \times 10^6$ Pa and an upper limit L in Pa of approximately

$$L \doteq 6.9 \times 10^3 \times (205 + 45e^{-25D})$$

where D is the power of the lens in diopters and e is the base of natural logarithms.

7. A method as in claim 5 for compression moulding one of a series of lenses comprising negative powers wherein the molten material has a predetermined initial temperature, further including the step of compressing the mold cavity to produce a predetermined pressure P of the molten molding material therein, wherein said pressure in Pa is approximately

$$P \doteq 6.9 \times 10^3 \times Ue^{-224D}$$

where U is a value ranging between a lower limit of approximately $1.1 \times 10^6$ Pa at a certain temperature of the molten moulding material and an upper limit L in Pa at said certain temperature of approximately

$$L \doteq 6.9 \times 10^3 \times (205 + 45e^{-25D})$$

where D is the power of the lens in diopters and e is the base of natural logarithms, the limits of the value of U varying inversely with variations in said predetermined temperature from said certain temperature.

**Patentansprüche**

1. Vorrichtung zum Formgießen eines Gegenstandes, die in Kombination einen Formhohlraum (46, 55) mit variablem Volumen, der zur Formung des Gegenstandes ausgebildet ist, Mittel (38) zum Zuführen eines Formmaterials mit einer vorbestimmten Temperatur, die hinreichend hoch ist, um dieses geschmolzen zu halten, und einem vorbestimmtem erhöhten Druck, ein Ventil (D) einschließende Mittel zum Verbinden der Zuführmittel mit dem Hohlraum, wobei das Ventil normalerweise geschlossen ist und den Fluß von geschmolzenem Material in den Hohlraum verhindert, aufweist, **gekennzeichnet durch** Mittel (84) zum Öffnen des Ventils für eine vorbestimmte Zeitperiode, um den Fluß einer vorbestimmten Masse des geschmolzenen Materials mit gleichbleibender Geschwindigkeit in den Hohlraum zu gestatten, wobei während der Periode des Fließens des geschmolzenen Materials der Hohlraum nur teilweise gefüllt wird und der Druck darin im wesentlichen konstant bleibt.

2. Vorrichtung nach Anspruch 1, die weiter Mittel zum Zusammendrücken des Formhohlraumes (46, 55) enthält, wobei die Mittel zum Zusammendrücken ein Stellglied (42) und eine Maschine mit variablem mechanischem Vorschub einschließende Mittel zum Verbinden des Stellgliedes (106, 108) mit dem Hohlraum aufweisen.

3. Vorrichtung nach Anspruch 1 oder 2, bei der die Maschine ein Paar von Verbindungsstükken (62, 72), die drehbar an einem Punkt verbunden sind, und das Stellglied einen drehbar angebrachten Zylinder (60) und eine Kolbenstange aufweist, die drehbar mit einer Verbindung benachbart zu dem Punkt verbunden ist.

4. Vorrichtung nach einem der Ansprüche 1 bis 3, wobei der Gegenstand eine einer Serie von Linsen ist, die negative Brechkraft aufweisen.

5. Verfahren zum Formpressen eines Gegenstandes, das den Schritt des Steuerns der Masse eines geschmolzenen Formmaterials aufweist, welches von einer Quelle unter erhöhtem Druck durch ein anfänglich geschlossenes Ventil (D) fließt, um mit einem im wesentlichen konstanten niedrigeren Druck einen Formhohlraum mit variablem Volumen teilweise auszufüllen, dadurch gekennzeichnet, daß der Steuerschritt die Schritte des Öffnens des Ventils, um einen Fluß des geschmolzenen Materials von der Quelle in den Hohlraum mit gleichmäßiger Rate zu ermöglichen, des Offenhaltens des Ventils für eine vorbestimmte Zeitperiode, um zu bewirken, daß eine vorbestimmte Masse des geschmolzenen Materials während der Periode in den Hohlraum fließt, und des Schließens des Ventils zum Beenden des Flusses, bevor der Hohlraum gefüllt ist, einschließt.

6. Verfahren wie in Anspruch 5, zum Formpressen einer Serie von Linsen mit negativer Brechkraft, weiter aufweisend die Schritte des Zusammendrückens des Formhohlraumes zur Erzeugung eines vorbestimmten Druckes P des geschmolzenen Formmaterials darin, wobei der Druck in Pa etwa

$$P = 6{,}9 \times 10^3 \times Ue^{-224D}$$

ist, worin U ein in einem Bereich zwischen einer unteren Grenze von etwa $1{,}1 \times 10^6$ Pa und einer oberen Grenze L in Pa von etwa

$$L = 6{,}9 \times 10^3 \times (205 + 45e^{-25D})$$

liegender Wert ist, worin D die Brechkraft der Linse in Dioptrien und e die Basis der natürlichen Logarithmen ist.

7. Verfahren wie in Anspruch 5 zum Druckgießen einer einer Serie von Linsen mit negativer Brechkraft, wobei das geschmolzene Material eine vorbestimmte Anfangstemperatur hat, das weiter den Schritt des Zusammendrückens des Formhohlraumes zur Erzeugung eines vorbestimmten Druckes P des geschmolzenen Formmaterials darin aufweist, wobei der Druck in Pa etwa

$$P = 6{,}9 \times 10^3 \times Ue^{-224D}$$

ist, worin U ein in einem Bereich zwischen einer unteren Grenze von etwa $1{,}1 \times 10^6$ Pa bei einer bestimmten Temperatur des geschmolzenen Formmaterials und einer oberen Grenze L in Pa bei der bestimmten Temperatur von etwa

$$L = 6{,}9 \times 10^3 \times (205 + 45e^{-25D})$$

ist, wobei D die Brechkraft der Linse in Dioptrien und e die Basis der natürlichen Logarithmen ist und die Grenzen des Wertes von U sich umgekehrt wie Änderungen der vorbestimmten Temperatur gegenüber der bestimmten Temperatur ändern.

**Revendications**

1. Appareil de moulage avec paraison d'un article, comprenant en combinaison une cavité de moule à volume variable (46, 55) prévue pour former l'article, des moyens (38) pour l'alimentation en matière de moulage à une température prédéterminée suffisamment élevée pour l'amener à l'état fondu et à une pression élevée prédéterminée, des moyens comprenant une soupape (D) destinée à relier les moyens d'alimentation à la cavité, la soupape étant normalement fermée et empêchant l'écoulement de matière fondue dans la cavité, caractérisé par des moyens (84) destinés à ouvrir la soupape pendant une durée prédéterminée afin de permettre l'écoulement à une vitesse uniforme dans la cavité d'une masse prédéterminée de matière fondue, la cavité étant seulement partiellement remplie et la pression à l'intérieur de celle-ci restant sensiblement constante pendant la période d'écoulement de la masse fondue.

2. Appareil selon la revendication 1, comprenant en outre des moyens destinés à comprimer la cavité de moule (46, 55), les moyens de compression comportant un dispositif d'actionnement (42) et des moyens comprenant une machine ayant un bras de levier variable afin de relier le dispositif d'actionnement (106, 108) à la cavité.

3. Appareil selon la revendication 1 ou 2, dans lequel la machine comprend une paire de biellettes (62, 72) reliées de façon pivotante en un point, et en ce que le dispositif d'actionnement comporte un cylindre monté de façon pivotante (60) et une tige de piston reliée de façon pivotante à une biellette adjacente audit point.

4. Appareil selon l'une quelconque des revendications 1 à 3, dans lequel l'article fait partie d'une série de lentilles ayant des puissances négatives.

5. Procédé de moulage par compression d'un article comprenant l'étape de contrôle de la masse d'une matière de moulage fondue qui s'écoule depuis une source à une pression élevée en passant par une soupape initialement fermée (D) afin de remplir partiellement à une pression inférieure sensiblement constante une cavité de moule à volume variable, caractérisé en ce que l'étape de contrôle comprend les étapes d'ouverture de la soupape afin de permettre l'écoulement à une vitesse uniforme de la matière fondue de la source vers la cavité, de maintien de la soupape ouverte pendant une durée prédéterminée afin d'amener une masse de matière fondue à s'écouler dans la cavité pendant ladite durée, et de fermeture de la soupape afin d'arrêter l'écoulement avant que la cavité soit remplie.

6. Procédé selon la revendication 5 de moulage par compression d'une lentille d'une série comprenant des puissances négatives, comprenant en outre les étapes de compression de la cavité de moule afin de produire une pression prédéterminée P de la matière de moulage fondue à l'intérieur de celle-ci, ladite pression en Pa étant d'approximativement

$$P \cong 6{,}9 \times 10^3 \times U \, e^{0{,}224D}$$

où U est une valeur s'échelonnant entre une limite inférieure d'approximativement $1{,}1 \times 10^6$ Pa et une limite supérieure L en Pa d'approximativement

$$L \cong 6{,}9 \times 10^3 \times (205 + 45 \, e^{0{,}25D})$$

où D est la puissance de la lentille en dioptries et e est la base des logarithmes naturels.

7. Procédé selon la revendication 5 de moulage par compression d'une lentille d'une série comprenant des puissances négatives, la matière fondue ayant une température initiale prédéterminée, comprenant en outre l'étape de compression de la cavité de moule afin de produire une pression prédéterminée P de la matière de moulage fondue à l'intérieur de celle-ci, ladite pression en Pa étant d'approximativement

$$P \cong 6{,}9 \times 10^3 \times U \, e^{0{,}224D}$$

où U est une valeur s'échelonnant entre une limite inférieure d'approximativement $1{,}1 \times 10^6$ Pa à une certaine température de la matière de moulage fondue et une limite supérieure L en Pa à ladite température d'approximativement

$$L \cong 6.9 \times 10^3 \times (205 + 45 \, e^{0{,}25D})$$

où D est la puissance de la lentille en dioptries et e est la base des logarithmes naturels, les limites de la valeur de U variant à l'inverse des variations de ladite température prédéterminée par rapport à ladite certaine température.

FIG. 1

200-1200 PSI

PNEUMATIC PRESSURE — 76

CONTROLLER — 80

HYDRAULIC PRESSURE — 90

500-600° F.

3-18 SEC.

REGULATORS

EP 0 312 455 B1

FIG. 2

FIG. 3

FIG. 4

FIG. 5

FIG. 6

EP 0 312 455 B1